# EUROPEAN PATENT SPECIFICATION

(11) **EP 0 330 385 B1**
(45) Date of publication and mention of the grant of the patent: **27.10.1993**
(21) Application number: 89301555.2
(22) Date of filing: 17.02.1989
(51) Int. Cl.: G01L 21/22, G01L 9/08

(54) **Pressure gauge with oscillating means**
Druckwandler mit Oszillator
Transducteur de pression à oscillateur

(30) Priority: 18.02.1988 JP 35981/88; 08.06.1988 JP 141161/88; 10.06.1988 JP 144128/88
(43) Date of publication of application: 30.08.1989
(73) Proprietor: SEIKO ELECTRONIC COMPONENTS LTD., Sendai-shi Miyagi (JP)
(72) Inventor: Tamura, Fujio c/o Seiko Electronic Components Ltd., Sendai-shi Miyagi-ken (JP)
(74) Representative: Miller, Joseph

(56) References cited:
- US-A- 3 079 800
- US-A- 4 607 530
- JOURNAL OF VACUUM SCIENCE & TECHNOLOGY/SECTION A, vol. 4, no. 3, part II, second series, May/June 1986, pages 1728-1731, New York, US; M. ONO et al.: "Quartz friction vacuum gauge for pressure range from 0.001 to 1000 torr"

## Description

This invention concerns a pressure gauge and, although the invention is not so restricted, it more particularly concerns a vacuum pressure gauge of the thermo-conductive type which may be used in vacuum devices and instruments.

A pressure gauge is known comprising a chamber adapted to contain a gas whose pressure is to be measured; a sensor means which is mounted in the chamber, the sensor means being responsive to the value of the characteristic of the said gas which is related to its pressure; and display and/or control means which displays the pressure of the said gas and/or exercises a control in dependence upon said pressure, the display or control means being itself controlled by the output of the sensor means. The known pressure gauge, however, involves the use of a high grade DC amplifier and an expensive analog/digital converter.

According, therefore, to the present invention, there is provided a pressure gauge comprising a chamber adapted to contain a gas whose pressure is to be measured; an oscillating sensor means which is mounted in the chamber, the oscillating sensor means being responsive to the value of a characteristic of the said gas which is related to its pressure; heating means for heating the oscillating sensor means; and display and/or control means which displays the pressure of the said gas and/or exercises a control in dependence upon said pressure, the display or control means being itself controlled by the output of the oscillating sensor means characterised in that the heating means are arranged to generate heat at a given constant rate, the oscillating sensor means comprising a temperature-dependent quartz oscillator whose oscillation frequency is dependent upon its body temperature, counter means being provided for counting the said oscillation frequency and for producing an output signal which is transmitted to the display and/or control means.

The present invention, which is thus based on the fact that the thermo-conductivity of a gas is a function of its pressure or is dependent upon its density, enables a compact reliable and cheap gauge to be provided.

The heating means may be disposed in the chamber adjacent to but spaced from the oscillating sensing means. In this case the heating means may comprise an electrically conductive filament which is connected in a circuit comprising an electrical heating power source.

The quartz oscillator may comprise a tuning fork quartz oscillator composed of a pair of opposed oscillating portions receptive of the heat transmitted from the heating means; a base portion which connects the pair of oscillating portions to each other; a supporting portion for supporting the base portion within the chamber; and connecting means which interconnect the base and supporting portions in such a way as to reduce transfer of heat from the base portion to the supporting portion. Moreover, the tuning fork quartz oscillator may comprise a photo-etched oscillator having oscillating, base and supporting portions and connecting means which are integral with each other.

Alternatively, the heating means may comprise at least one heating member formed on the quartz oscillator. Thus the quartz oscillator may comprise a tuning fork oscillator having a pair of oscillating portions each of which is formed with a thermo-conductive film member.

The or each thermo-conductive member may comprise a chromium film.

Preferably, the pressure gauge is a vacuum pressure gauge, the chamber being a vacuum chamber.

In its preferred form, the pressure gauge comprises a quartz oscillator which is disposed within a vacuum chamber, the oscillator having an oscillation frequency dependent on the body temperature of the oscillator. A constant heat source is disposed in spaced relation to or directly on the temperature-dependent quartz oscillator for heating the same to hold the body temperature thereof at a predetermined value which is dependent on the pressure of the surrounding gas within the chamber. The oscillating frequency of quartz oscillator is converted into a signal indicative of the gas pressure.

The invention is illustrated, merely by way of example, in the accompanying drawings, in which:-
Figure 1 is a circuit block diagram showing a vacuum pressure gauge according to the present invention;
Figure 2 is a circuit block diagram showing a known Pirani vacuum pressure gauge;
Figure 3 is a diagram showing the relationship between the oscillating frequency and the body temperature of a quartz oscillator which may be used in the vacuum pressure gauge of Figure 1;
Figure 4 is a graph showing the relationship between the oscillation frequency of a said quartz oscillator and the measured gas pressure;
Figure 5 is a front plan view of a said oscillator which may be used in the vacuum pressure gauge of Figure 1; and
Figures 6A, 6B and 6C are side, front and rear views, respectively, of another quartz oscillator which may be used in the vacuum pressure gauge of Figure 1.

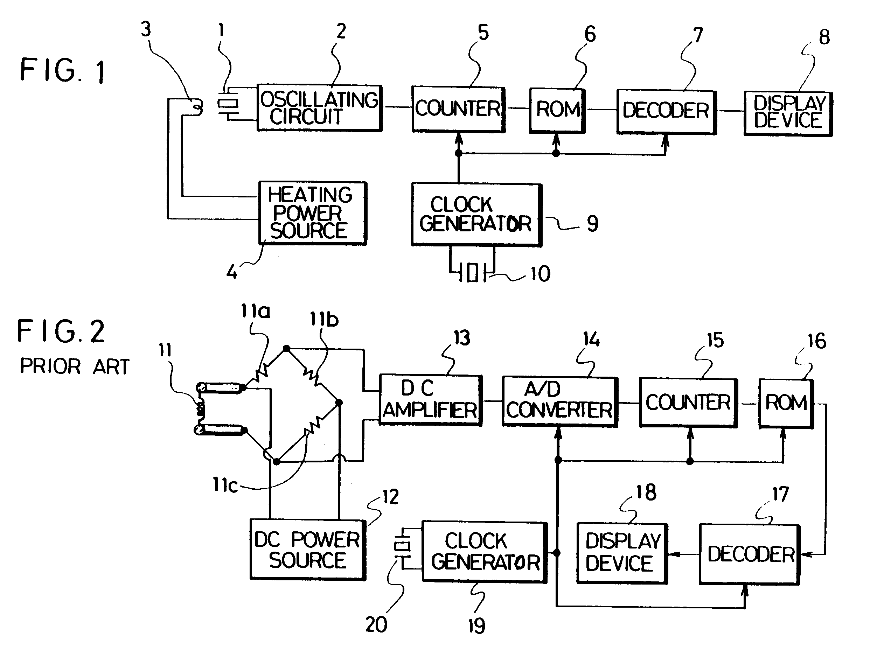

A thermo-conductive type vacuum gauge such as the Pirani gauge has been generally used for pressure measurement in the intermediate and low pressure range (10⁻³ -1 torr, i.e. approximately 10⁻¹ -100Pa). Figure 2 shows an example of the Pirani vacuum pressure gauge of the thermo-conductive type with a digital display. One resistive element of a bridge circuit is composed of a filament 11 which is disposed within a vacuum chamber (not shown) and operates as a sensor of the gas pressure in the vacuum chamber. The other resistive elements 11a, 11b and 11c of the bridge circuit are disposed outside the vacuum chamber, and a DC power source 12 applies a constant DC voltage to the bridge circuit. The equilibrium voltage of the bridge circuit is amplified by a DC amplifier 13, and the amplified DC voltage is converted into a corresponding digital signal by an analog-to-digital converter 14 (A/D converter). A counter 15 counts the output signal of the A/D converter 14 to produce an address signal for a subsequent read-only-memory 16 (ROM). The ROM 16 feeds to a decoder 17 a display signal (i.e. a signal indicative of the value of the said gas pressure) corresponding to the output signal of the counter 15 (i.e. the signal representative of gas pressure information). The decoder 17 decodes the display signal so that a subsequent display device 18 (for example, a seven-digit LED display device) can display the value of the gas pressure. A logic system from the A/D converter 14 to the decoder 17 is controlled by a clock signal which is fed from a clock generator 19 having an oscillating source constituted by a quartz oscillator 20.

In operation, if the pressure within the vacuum chamber decreases, the heat dissipated from the filament 11 decreases so that the temperature of the filament 11 rises. There is therefore an increase in the electrical resistance of the filament 11 so that the equilibrium voltage of the bridge circuit is increased. As described above, the equilibrium voltage of the bridge circuit is a function of the gas pressure within the vacuum chamber. Hence the pressure within the vacuum chamber can be detected by measuring the equilibrium voltage of the bridge circuit.

Although the known vacuum gauge of the thermo-conductive type can be conveniently and widely used to measure the gas pressure in the intermediate and low pressure range, it has the following drawbacks.
1. Since any drift of the DC amplifier 13 would directly cause a measurement error, a highly stable (and therefore expensive) DC amplifier is required.
2. An expensive A/D converter 14 is required for the digital display of the measurement result.
3. Since the filament 11 functions as a heat-generating source as well as a gas pressure sensor, there may be a marked deterioration of the pressure sensitivity thereof.

As described above, the known vacuum gauge of the thermo-conductive type has drawbacks such as the need for a high grade DC amplifier and for an expensive A/D converter in the case of a digital display of the measurement, and this increases the cost of the vacuum gauge, and leads to substantial deterioration of the pressure sensor.

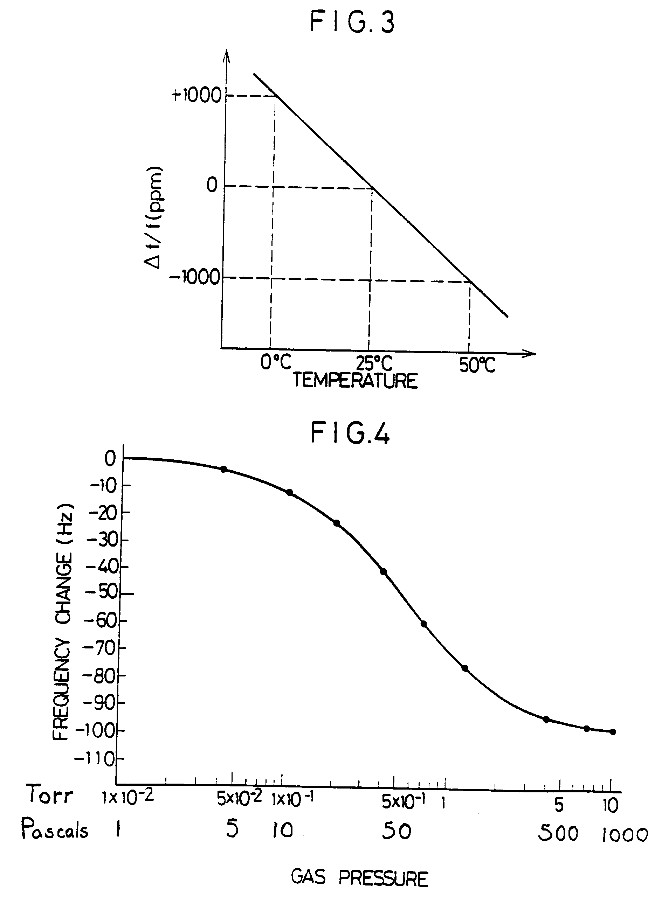

Figure 1 is a circuit block diagram showing one embodiment of a vacuum pressure gauge according to the present invention which overcomes the above-mentioned drawbacks. The vacuum pressure gauge comprises a temperature dependent quartz oscillator 1, the oscillating output frequency of which changes in response to the ambient temperature as shown in Figure 3. An oscillating circuit 2 (of the self-oscillating type) drives the quartz oscillator 1, and is normally comprised of a simple non-regulative oscillating circuit such as a Colpitts circuit composed of a CMOS inverter. An electrically conductive filament 3 is disposed an appropriate distance from the quartz oscillator 1 to heat the same. A heating power source 4 feeds a constant level of electric power to the filament 3 to enable the filament 3 to generate heat at a given constant rate. The assembly comprising the temperature-dependent quartz oscillator 1 and the filament 3 are disposed within a vacuum chamber (not shown).

When the gas pressure within the vacuum chamber is reduced and the gas density is decreased, the amount of heat transmitted from the filament 3 to the quartz oscillator 1 through the gas medium is reduced to decrease the temperature of the quartz oscillator body and thereby increase the oscillating frequency thereof. On the other hand, when the gas pressure increases within the vacuum chamber and therefore the gas density increases, the amount of heat transmitted through the gas medium is increased to increase the quartz oscillator body temperature and thereby decrease the oscillating frequency of the quartz oscillator 1.

As will be appreciated, the temperature of the filament 3, the dimensions of the quartz oscillator 1 and the mutual positioning of the filament 3 and quartz oscillator 1 should be precisely determined so that the gas pressure within the vacuum chamber can be precisely measured in terms of the change of oscillating frequency of the quartz oscillator 1. Figure 4 shows the relationship between the gas pressure and the oscillating frequency of such a quartz oscillator.

In this embodiment, the temperature-dependent quartz oscillator 1 is comprised of a tuning fork type quartz oscillator having a standard frequency of 33 KHz. The logic system in this embodiment operates in a manner similar to that of the known vacuum gauge. In the Figure 1 embodiment, the oscillating frequency of the output signal from the oscillating circuit 2 is counted by a counter 5, and the output of the counter 5 is effective to designate an address of a ROM 6. The output signal from the ROM 6 and stored in the designated address is a binary-coded signal representative of the measured value of the gas pressure. A decoder 7 decodes the binary-coded signal and applies the decoded signal to a display device 8 composed of seven digits to enable the display device 8 to display the measured value of the gas pressure. A clock generator 9 applies a clock signal to the counter 5, the ROM 6 and the decoder 7, the clock generator 9 having a quartz oscillator 10 comprised of an AT cut quartz oscillator having a specific frequency of 4.19 MHz.

Since the temperature change due to the gas pressure change is detected in terms of the oscillating frequency change of the quartz oscillator 1, a digital signal representative of the gas pressure can be obtained by means of a simple circuit. Consequently, the vacuum pressure gauge shown in Figure 1 can provide a new vacuum gauge of the thermo-conductive type at a considerably lower price than hitherto without the use of an expensive DC amplifier and an A/D converter which would be needed in the known vacuum gauge.

The vacuum pressure gauge shown in Figure 1 also has the advantage that the detection of the gas pressure is substantially unaffected by drift because the variation of the oscillating frequency of the quartz oscillator due to the ageing effect is very small, and the relationship between the gas pressure and the oscillating frequency is not substantially affected by a tiny accumulation on the oscillator.

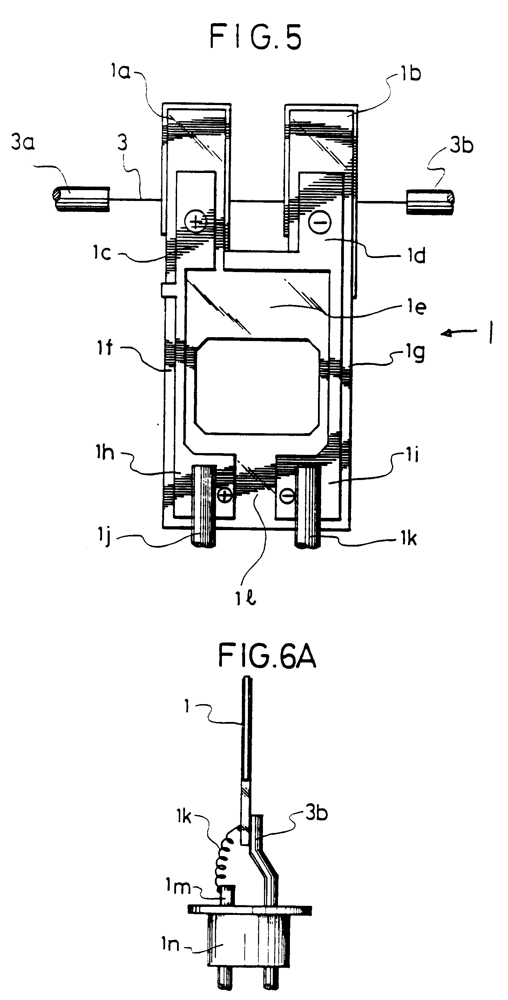

Figure 5 is a plan view of a temperature dependent quartz oscillator which may be used in the vacuum pressure gauge of Figure 1. The oscillator 1 has a tuning fork shape and a specific oscillating frequency of about 33 KHz. The oscillator comprises a pair of legs or oscillating portions 1a and 1b, and a pair of electrodes 1c and 1d for applying electric fields which are effective to drive the respective oscillating portions 1a and 1b. As shown in Figure 5, each electrode 1c, 1d is formed on the front and side faces of the corresponding oscillating portion 1a,1b. By such an arrangement of the electrodes, the quartz oscillator 1 undergoes flexural oscillation at its oscillating portions 1a, 1b according to well known principles. The electrodes 1c and 1d are connected to corresponding electrode lead members 1j and 1k, respectively, through electrode pads 1h and 1i which are formed on a supporting portion 1ℓ of the oscillator 1. The temperature dependent quartz oscillator 1 is supported vertically by means of the electrode lead members 1j and 1k. The oscillator 1 is comprised also of a base portion 1e of the tuning fork shape which connects the oscillating portions 1a, 1b to each other.

In a known tuning fork quartz oscillator, the electrode pads 1h and 1i would be disposed on the base portion 1e. However, in the temperature dependent quartz oscillator 1 illustrated in Figure 5, the base portion 1e and the supporting portion 1ℓ are mechanically connected to each other through a pair of narrow connecting portions 1f and 1g. The narrow connecting portions 1f and 1g are formed by an etching process during the shaping of the tuning fork quartz oscillator.

A heating source, which is actually a filament 3, is disposed adjacent to the oscillator 1. The heating source is supported by a pair of supporting members 3a and 3b so as to be a predetermined distance from the temperature-dependent quartz oscillator 1 and thus apply heat to the quartz oscillator 1.

In operation, when Q_{i n}(P) represents a heat amount transmitted from the heating source 3 to the quartz oscillator 1, where P indicates gas pressure, Q_{i n}(P) is proportional to P, and Q_{o u t} represents a heat amount dissipated from the quartz oscillator 1 through the electrode lead members 1j, 1k thereof, the heat amount Δ Q accumulated in the quartz oscillator 1 is determined according to the following relationship:-

${\text{Δ Q = Q}}_{\text{i n}} {\text{(P) -Q}}_{\text{o u t}} \text{(1)}$

When the specific heat of the temperature-dependent quartz oscillator 1 is represented by c, and the mass thereof is represented by m, the temperature change ΔT of the quartz oscillator body due to the accumulated heat amount ΔQ is determined according to the following relationship:-

$\text{ΔT = ΔQ/mc (2)}$

The oscillating frequency change Δf of the temperature-dependent quartz oscillator due to the body temperature changes ΔT thereof is represented by the following relationship, where α indicates the temperature coefficient of the temperature dependent quartz oscillator 1:-

$\text{Δf = - αΔT = - αΔQ/mc (3)}$

In order to increase the sensitivity i.e. to increase Δf, ΔQ should be increased and m should be decreased (which means reducing the size of the quartz oscillator) according to the relationship (3) whereas and c are constant values specific to quartz. In order to increase ΔQ, Q_{i n} should be increased or Q_{o u t} should be decreased. Q_{i n} is the amount of heat fed from the filament 3 to the quartz oscillator 1 due to thermal conduction through the gas medium, and therefore Q_{i n} is proportional to the gas pressure. On the other hand Q_{o u t} is the amount of heat dissipated from the quartz oscillator body through the electrode lead members 1j and 1k thereof and is irrespective of the pressure of the gas medium. Consequently, in order to increase the pressure sensitivity of the quartz oscillator 1 in the low gas pressure range, the amount of heat dissipated Q_{o u t} must be reduced as much as possible. Consequently, the narrow connecting portions 1f and 1g of the quarts oscillator 1 are provided to prevent the amount of heat fed from the filament 3 from being transmitted through the electrode lead members 1j and 1k as much as possible. Since the amount of heat transmitted through the connecting portions 1f, 1g is proportional to the cross section of the connecting portions 1f, 1g and inversely proportional to the length thereof, the width of the connecting portions 1f, 1g is reduced as narrow as possible and the length thereof is elongated to reduce the amount of dissipated heat Q_{o u t} to a minimum so as thereby to increase the pressure sensitivity in the low gas pressure range. The provision of the connecting portions 1f, 1g permits easy measurement of the gas pressure in the range of 1 x 10⁻³ torr (10⁻¹ Pa). In addition, the connecting portions 1f, 1g are formed by photo-etching technology concurrently during the process of shaping the tuning fork quartz oscillator element without an additional fabrication step.

However, when the heat source is disposed in spaced relation to the quartz oscillator, the vacuum gauge may have the following drawbacks.
1. Since the heating source and the quartz temperature sensor are disposed in spaced relation from each other, heat dissipation is great, thereby increasing the required heating power and the size of the gauge.
2. Even if the distance between the heat source and the quartz temperature sensor is changed only slightly, the amount of heat transmitted to the sensor is changed, and the sensitivity is also changed.
3. It is difficult to reduce the dimensions of the sensor portion.

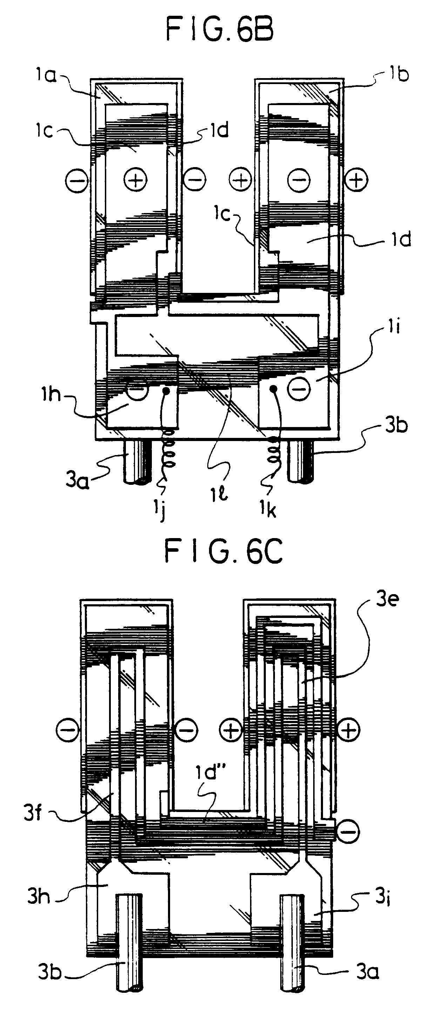

In view of this, in the embodiment illustrated in Figures 6A, 6B and 6C, the quartz oscillator is integrated with a heat source.

Referring to Figures 6A, 6B and 6C, a temperature dependent quartz oscillator 1 having the temperature characteristic shown in Figure 3 is provided with a pair of lead members 3a and 3b which are supported by a stem 1n. A pair of fine lead wires 1j and 1k are respectively connected to another pair of lead members 1m (only one shown) which are supported by the stem 1n.

Figure 6B is a front view showing a front face or one of the major faces of the temperature-dependent quartz oscillator 1, which is comprised of a pair of oscillating or leg portions 1a and 1b, and a pair of electrodes 1c and 1d formed, as shown in Figure 6B, on the major and side faces of the oscillating portions 1a and 1b for producing electric fields effective to drive the oscillating portions 1a, 1b. Such an arrangement of the electrodes 1c, 1d produces flexural oscillation of the oscillating portions 1a, 1b according to known principles. The electrodes 1c, 1d are connected to the fine lead wires 1j and 1k, respectively, through a pair of electrode pads 1h and 1i formed on a supporting portion 1ℓ of the oscillator 1.

Figure 6C is a rear view of the temperature-dependent quartz oscillator 1 showing the other major face. A pair of fine thermo-electric members 3e and 3f formed, for example, of chromium thin film of about 500Å (5x10⁻⁸m) thickness, or of other thermo-electric materials, are disposed on the rear faces of the oscillating portions 1a and 1b. The pair of thermo-electric members 3e and 3f are electrically and mechanically connected to the corresponding lead members 3a and 3b through a pair of heating pads 3h and 3i (by using high-melting-point solder). A constant DC voltage is applied between the lead members 3a and 3b so that the thermo-electric members 3e and 3f which are connected in series to each other produce heat (the amount of heat produced being represented by QW) so as to heat the quartz oscillator 1. The amount of heat dissipated from the quartz oscillator 1 is the sum of the amount of heat QM dissipated from the surface of the quartz oscillator 1 into the surrounding gas medium and the amount of heat QL dissipated through the lead members 3a, 3b. Therefore, the increased temperature ΔT of the temperature-dependent quartz oscillator 1 is represented by the following relationship:-

$\text{ΔT = (QW - QM - QL)/mc (1)}$

where m represents the mass of the quartz oscillator 1, and c represents the specific heat thereof. Since the amount of dissipated heat QM is proportional to the pressure P of the surrounding gas, the temperature change ΔT is represented by the following relationship:

$\text{ΔT = (QW - QL - KP)/mc (2)}$

where K is a constant. On the other hand, the oscillating frequency change Δf of the temperature-dependent quartz oscillator 1 is represented by the following relationship;-

$\text{Δf = - αΔT + β (3)}$

where α is the primary temperature coefficient of the quartz oscillator and β is a constant. Consequently, the pressure P of the surrounding gas is detected according to the frequency changes Δf as indicated by the relationships (2) and (3).

By arranging the heat source in the form of thermo-electric films 3e and 3f integrally on the rear major face of temperature-dependent quartz oscillator 1, the following advantages are obtained.
1. Since there is no substantial loss by way of heat transfer from the heat source to the temperature-dependent quartz oscillator, the electrical power required for heating can be greatly reduced.
2. Since the heat source and the temperature-dependent quartz oscillator are integral with each other, there is no need to adjust the distance therebetween, there is no substantial transient change of the amount of transferred heat, and therefore a stable pressure measurement can be achieved.
3. Since the heat source and the temperature-dependent quartz oscillator are integrated with each other, the efficiency of heat transfer from the heat source to the quartz oscillator is not changed in principle even if the temperature-dependent quartz oscillator is reduced in size, thereby permitting a reduction of the size of the temperature-dependent quartz oscillator. Consequently, as will be understood from the relationship (2), the sensitivity can be increased.

## Claims

1. A pressure gauge comprising a chamber adapted to contain a gas whose pressure is to be measured; an oscillating sensor means (1) which is mounted in the chamber, the oscillating sensor means (1) being responsive to the value of a characteristic of the said gas which is related to its pressure; heating means (3) for heating the oscillating sensor means (1); and display and/or control means (8) which displays the pressure of the said gas and/or exercises a control in dependence upon said pressure, the display or control means (8) being itself controlled by the output of the oscillating sensor means characterised in that the heating means are arranged to generate heat at a given constant rate, the oscillating sensor means comprising a temperature-dependent quartz oscillator (1) whose oscillation frequency is dependent upon its body temperature, counter means (5) being provided for counting the said oscillation frequency and for producing an output signal which is transmitted to the display and/or control means (8).

2. A pressure gauge as claimed in claim 1 characterised in that the heating means (3) is disposed in the chamber adjacent to but spaced from the oscillating sensing means (1).

3. A pressure gauge as claimed in claim 2 characterised in that the heating means comprises an electrically conductive filament (3) which is connected in a circuit comprising an electrical heating power source (4).

4. A pressure gauge as claimed in any preceding claim characterised in that the quartz oscillator comprises a tuning fork quartz oscillator (1) composed of a pair of opposed oscillating portions (1a, 1b) receptive of the heat transmitted from the heating means (3); a base portion (1e) which connects the pair of oscillating portions (1a, 1b) to each other; a supporting portion (1ℓ) for supporting the base portion (1e) within the chamber; and connecting means (1f, 1g) which interconnect the base and supporting (1e, 1ℓ) in such a way as to reduce transfer of heat from the base portion (1e) to the supporting portion (1ℓ).

5. A pressure gauge as claimed in claim 4 characterised in that the tuning fork quartz oscillator (1) comprises a photo-etched oscillator having oscillating, base and supporting portions (1a, 1b, 1e, 1ℓ) and connecting means (1f, 1g) which are integral with each other.

6. A pressure gauge as claimed in claim 1 characterised in that the heating means comprises at least one heating member (3e, 3f) formed on the quartz oscillator (1).

7. A pressure gauge as claimed in claim 6 characterised in that the quartz oscillator comprises a tuning fork oscillator having a pair of oscillating portions (1b, 1c) each of which is formed with a thermo-conductive film member (3e, 3f).

8. A pressure gauge as claimed in claim 5 or 6 characterised in that the or each thermo-conductive member comprises a chromium film.

9. A pressure gauge as claimed in any preceding claim characterised in that the pressure gauge is a vacuum pressure gauge, the chamber being a vacuum chamber.

## Patentansprüche

1. Druckmeßgerät umfassend eine Kammer, welche geeignet ist, ein Gas zu enthalten, dessen Druck zu messen ist; ein in der Kammer angebrachtes oszillierendes Sensormittel (1), wobei das oszillierende Sensormittel (1) auf den Wert einer mit dem Druck des Gases zusammenhängenden Eigenschaft des Gases anspricht; Heizmittel (3) zum Erwärmen des oszillierenden Sensormittels (1); und ein Anzeige- und/oder Steuermittel (8), welches den Druck des Gases anzeigt und/oder abhängig von dem Druck eine Steuerung durchführt, wobei das Anzeige- oder Steuermittel (8) selbst durch den Ausgang des oszillierenden Sensormittels gesteuert ist,
**dadurch gekennzeichnet,** daß
die Heizmittel dazu angeordnet sind, Wärme mit einer gegebenen konstanten Rate zu erzeugen, wobei das oszillierende Sensormittel einen temperaturabhängigen Quarzoszillator (1) umfaßt, dessen Oszillationsfrequenz von seiner Körpertemperatur abhängt, und wobei Zählermittel (5) zum Zählen der Oszillationsfrequenz und zum Erzeugen eines Ausgangssignals vorgesehen sind, welches zu dem Anzeige- und/oder Steuermittel (8) übertragen wird.

2. Druckmeßgerät nach Anspruch 1, **dadurchgekennzeichnet,** daß das Heizmittel (3) in der Kammer dem oszillierenden Sensormittel (1) benachbart, aber mit Abstand von diesem angeordnet ist.

3. Druckmeßgerät nach Anspruch 2, **dadurch gekennzeichnet,** daß das Heizmittel einen elektrisch leitenden Heizfaden (3) umfaßt, welcher mit einer eine elektrische Heizenergiequelle (4) umfassenden Schaltung verbunden ist.

4. Druckmeßgerät nach einem der vorhergehenden Ansprüche, **dadurch gekennzeichnet,** daß der Quarzoszillator einen Stimmgabelquarzoszillator (1) umfaßt, welcher besteht aus einem Paar gegenüberliegender, die von dem Heizmittel (3) übertragene Wärme aufnehmender, Oszillationsabschnitte (1a,1b);
einem das Paar Oszillationsabschnitte (1a,1b) miteinander verbindenden Basisabschnitt (1e);
einem Trägerabschnitt (1l) zum Tragen des Basisabschnitts (1e) innerhalb der Kammer und
Verbindungsmitteln (1f,1g), welche den Basis- und Trägerabschnitt (1e,1l) derart verbinden, daß die Wärmeübertragung von dem Basisabschnitt (1e) zu dem Trägerabschnitt (1l) verringert wird.

5. Druckmeßgerät nach Anspruch 4, **dadurch gekennzeichnet,** daß der Stimmgabelquarzoszillator (1) einen photogeätzten Oszillator umfaßt, welcher integral miteinander verbundene Oszillator-, Basis- und Trägerabschnitte (1a,1b,1e,1l) und Verbindungsmittel (1f,1g) aufweist.

6. Druckmeßgerät nach Anspruch 1, **dadurch gekennzeichnet,** daß das Heizmittel wenigstens ein auf dem Quarzoszillator (1) ausgebildetes Heizelement (3e,3f) umfaßt.

7. Druckmeßgerät nach Anspruch 6, **dadurch gekennzeichnet,** daß der Quarzoszillator einen Stimmgabeloszillator umfaßt, welcher ein Paar von Oszillationsabschnitten (1b,1c) aufweist, von denen jeder mit einem wärmeleitenden Filmelement(3e,3f) geformt ist.

8. Druckmeßgerät nach Anspruch 5 oder 6, **dadurch gekennzeichnet,** daß das oder jedes wärmeleitende Element einen Chromfilm umfaßt.

9. Druckmeßgerät nach einem der vorhergehenden Ansprüche, **dadurch gekennzeichnet,** daß das Druckmeßgerät ein Unterdruckmeßgerät ist, wobei die Kammer eine Vakuumkammer ist.

## Revendications

1. Manomètre comprenant une chambre apte à contenir un gaz dont la pression doit être mesurée; un capteur oscillant (1) qui est monté dans la chambre, le capteur oscillant (1) étant sensible à la valeur d'une caractéristique du gaz qui est liée a sa pression; des moyens chauffants (3) pour chauffer le capteur oscillant (1); et des moyens (8) d'affichage et/ou de commande qui affichent la pression du gaz et/ou exercent une commande en fonction de ladite pression, les moyens (8) d'affichage ou de commande étant eux-mêmes commandés par la sortie du capteur oscillant, caractérisé en ce que les moyens chauffants sont agencés de manière à engendrer de la chaleur a un taux constant donné, le capteur oscillant comprenant un oscillateur a quartz (1) qui dépend de la température et dont la fréquence d'oscillation dépend de sa température de corps, des moyens (5) de comptage étant disposés de manière à compter ladite fréquence d'oscillation et à produire un signal de sortie qui est transmis aux moyens (8) d'affichage ou de commande.

2. Manomètre selon la revendication 1, caractérisé en ce que les moyens chauffants (3) sont disposés dans la chambre près du capteur oscillant (1) mais espacé de celui-ci.

3. Manomètre selon la revendication 2 caractérisé en ce que les moyens chauffants comprennent un filament (3) électriquement conducteur qui est relié à un circuit comprenant une source d'énergie électrique (4) de chauffage.

4. Manomètre selon l'une quelconque des revendications précédentes, caractérisé en ce que l'oscillateur à quarts comprend un oscillateur à quart! (1) à diapason composé d'une paire de parties oscillantes opposées (1a, 1b) recevant la chaleur transmise par les moyens chauffants (3); Une partie de base (1e) qui relie entre elles la paire de parties oscillantes (1a, 1b); une partie de support (1*l*) pour supporter la partie de base (1e) à j'intérieur de la chambre; et des moyens de liaison (1f, 1g) qui relient entre elles les parties de base et de support (1e, 1*l*) de manière & réduire le transfert de chaleur de la partie de base (1e) vers la partie de support (1*l*).

5. Manomètre selon la revendication 4, caractérisé en ce que l'oscillateur & quarts (1) & diapason comprend un oscillateur photogravé comportant des parties oscillantes et des parties de base et de support (1a, 1b, 1e, 1*l*) et des moyens de liaison (1f, 1g) qui sont d'un seul tenant entre eux.

6. Manomètre selon la revendication 1, caractérisé en ce que les moyens chauffants comprennent au moinS un élément chauffant (3e, 3f) formé sur l'oscillateur a quarts (1).

7. Manomètre selon la revendication 6, caractérisé en ce que l'oscillateur a quarts comprend un oscillateur & diapason pourvu d'une paire de parties oscillantes (1b, 1c) qui sont formées chacune d'un élément de film (3e, 3f) conduisant la chaleur.

8. Manomètre selon la revendication 5 ou 6, caractérisé en ce que les éléments conduisant la chaleur ou chacun d'eux comprennent un film en chrome.

9. Manomètre selon une revendication précédente quelconque caractérisé en ce que le manomètre est un manomètre a vide, la chambre étant une chambre a vide.
